Europäisches Patentamt

European Patent Office

Office européen des brevets

(19)

(11) Numéro de publication : **0 112 234 B1**

(12) **FASCICULE DE BREVET EUROPÉEN**

(45) Date de publication du fascicule du brevet :
04.05.88

(51) Int. Cl.⁴ : **H 04 J 15/00, G 02 B  6/24**

(21) Numéro de dépôt : **83402336.8**

(22) Date de dépôt : **05.12.83**

(54) Composant optique à fonction partagée pour télétransmissions optiques.

(30) Priorité : 08.12.82 FR 8220547

(43) Date de publication de la demande :
27.06.84 Bulletin 84/26

(45) Mention de la délivrance du brevet :
04.05.88 Bulletin 88/18

(84) Etats contractants désignés :
AT BE CH DE FR GB IT LI LU NL SE

(56) Documents cités :
WO-A-82 /016 31
ELECTRONICS LETTERS, vol. 16, no. 3, 31 janvier
1980, pages 106-108, Londres, GB, R. WATANABE et
al.:"Optical demultiplexer using concave grating in
0.7-0.9 mum wavelength region"
PATENTS ABSTRACTS OF JAPAN, vol. 6, no. 255, 14
décembre 1982, page 97 P 162 & JP-A-57 151 911
(TAKUMI TOMIJIMA) 20-09-1982

(73) Titulaire : INSTRUMENTS S.A.
25, avenue de l'Opéra
F-75001 Paris (FR)

(72) Inventeur : Laude, Jean-Pierre
3 rue des Graveriots
F-91690 St Cyr La Rivière (FR)

(74) Mandataire : Phélip, Bruno et al
c/o Cabinet Harlé & Phélip 21, rue de la Rochefoucauld
F-75009 Paris (FR)

**Description**

La présente invention concerne un composant optique à fonction partagée pour télétransmissions optiques, plus particulièrement destiné au mélange ou à la séparation de signaux optiques dans des systèmes de télétransmission ou télédistribution d'informations par fibres optiques.

Les importants développements, réalisés ou en projet, de télétransmission par voie optique amènent à connecter chaque usager à un centre d'émission ou de relais par l'intermédiaire de fibres optiques de transmission munies à chacune de leurs extrémités d'un composant optique destiné à relier l'émetteur de lumière modulée à la fibre pour y faire pénétrer la lumière, ou bien à l'autre extrémité à recueillir la lumière pour la diriger vers un détecteur qui décodera le signal optique pour le transformer en un signal électrique ou électronique utilisable dans un récepteur usuel. Pour des raisons économiques, on cherche le plus souvent à faire passer simultanément plusieurs signaux dans une même fibre, ce qui oblige à un multiplexage en amont et un démultiplexage en aval.

On connaît des appareils capables de réaliser des séparations de lumières, et par exemple ceux décrits par le document FR-A-2 479 981 et ses deux additions FR-A-2 491 211 et FR-A-2 496 260, dans lesquels on associe un miroir concave et un réseau de diffraction, ou encore les documents EP-A-0 083 542, EP-A-0 102 264 et EP-A-0 099 823 publiés après la date de priorité du présent brevet respectivement le 13-7-83, le 7-3-84 et le 1-2-84, et faisant partie de l'état de la technique du titre de l'Article 54 (3) EPC utilisant des miroirs sélectifs à couches diélectriques. Mais de tels composants sont d'un prix de revient relativement élevé, et leur multiplication dans des installations peut constituer un handicap économique au développement d'une telle technique.

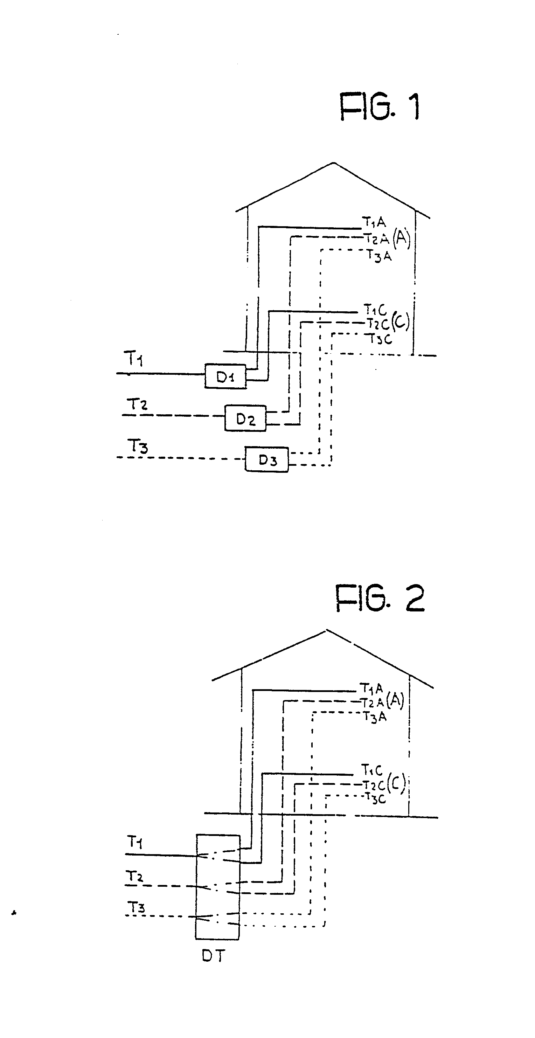

On rencontre le même genre de problème dans le cas de réseaux de distribution optique câblée de programmes de télévision, comme représenté schématiquement à la figure 1, où les lignes $T_1$, $T_2$, $T_3$ porteuses chacune d'un programme doivent être distribuées à au moins deux abonnés A et C d'un même immeuble. Ici encore il faudra, en bout de chaque ligne $T_1$, $T_2$, $T_3$ prélever pour chaque abonné une partie du signal transmis, et il faudra installer trois composants distributeurs identiques.

On connaît aussi des composants capables de remplir cette fonction, et par exemple ceux décrits par le document (FR-A-2 505 056) et le document EP-A-0 109 904, publié le 30-5-84, après la date de dépôt du présent brevet et faisant partie de l'état de la technique au sens de l'Article 54 (3) EPC utilisant des miroirs concaves, complets ou partiels, dont les centres sont légèrement décalés. Mais ici encore les miroirs qui doivent être d'une grande précision rendent relativement élevé le coût de tels composants.

La présente invention permet de réduire de façon notable le nombre de composants nécessaires à une installation, et par conséquent de réduire le coût global de l'installation.

L'invention s'applique donc à un composant optique du type comportant des fibres optiques en des positions relatives conjuguées objet-image pour regrouper ou séparer des lumières selon une fonction définie par la structure du composant. Selon l'invention le composant comporte simultanément plusieurs groupes de fibres conjuguées objet-image relativement à la même fonction, l'ensemble des groupes de fibres étant disposées dans la même zone de faibles aberrations.

Selon une forme préférentielle de réalisation de l'invention les fibres optiques d'entrée et de sortie sont disposées en barrettes rectilignes de fibres juxtaposées, plusieurs barrettes pouvant elles-mêmes être juxtaposées entre elles.

La présente invention a donc pour objet un composant pour télécommunications optiques destiné à séparer des lumières comportant un ensemble de fibres et une optique de focalisation à deux miroirs séparateurs dans lequel il est prévu une pluralité de fibres de transmission noyées dans un bloc solidaire de l'optique de focalisation et de séparation et dont les extrémités sont situées dans le plan de focalisation au voisinage de l'axe optique principal tandis que ledit bloc renferme aussi un ensemble de fibres reliées aux récepteurs, la position géométrique de l'extrémité des fibres reliées aux récepteurs dans ledit plan de focalisation étant telle que chaque fibre de transmission est conjuguée par l'optique de focalisation et de séparation à un groupe d'au moins deux fibres reliées aux récepteurs, l'ensemble des fibres optiques de transmission et des fibres optiques liées aux récepteurs étant disposé sous forme d'une barrette rectiligne de fibres sur laquelle les fibres de transmission sont placées l'une à côté de l'autre et les fibres reliées aux récepteurs sont aux positions relatives optiquement conjuguées par l'optique de focalisation à miroirs séparateurs dont les centres de réflexion dans le plan de focalisation sont décalés le long de la barrette.

La présente invention vise également :

- un composant pour télécommunications optiques destiné à séparer des lumières comportant un ensemble de fibres et une optique de focalisation à deux miroirs séparateurs, dans lequel il est prévu une pluralité de fibres de transmission noyées dans un bloc dont les extrémités sont situées dans le plan de focalisation au voisinage de l'axe optique principal tandis que ledit bloc renferme aussi un ensemble de fibres, reliées aux récepteurs, la position géométrique de l'extrémité des fibres reliées aux récepteurs dans ledit plan de focalisation étant telle que chaque fibre de transmission est conjuguée par l'optique de focalisation et de séparation à un groupe d'au moins deux fibres reliées aux récepteurs, l'ensemble des fibres optiques de transmission et des fibres optiques liées aux récepteurs étant disposé sous forme de trois barrettes rectilignes parallèles entre elles, les fibres de transmission sont alignées côte à côte et les fibres reliées aux récepteurs sont aux positions relatives optiquement conjuguées par l'optique de focalisation à miroir séparateur, les centres de réflexion étant décalés entre eux dans la direction perpendiculaire à la ligne des fibres de transmission,

- un composant pour télécommunications optiques destinés à séparer des lumières comportant un ensemble de fibres et une optique de focalisation et de séparation à deux miroirs séparateurs dans lequel il est prévu trois fibres de transmission, noyées dans un bloc dont les extrémités sont situées dans le plan de focalisation au voisinage de l'axe optique principal tandis que ledit bloc renferme aussi un ensemble de fibres reliées aux récepteurs, la position géométrique de l'extrémité des fibres reliées aux récepteurs dans ledit plan de focalisation étant telle que chaque fibre de transmission est conjuguée par l'optique de focalisation et de séparation à deux fibres reliées aux récepteurs, l'ensemble des fibres optiques de transmission et des fibres optiques liées aux récepteurs comportant trois barrettes rectilignes de trois fibres juxtaposées en carré et tel que les trois fibres de transmission soient alignées selon l'un des axes de symétrie non diagonal du carré et que les deux centres de réflexion correspondant aux deux miroirs séparateurs soient situés sur l'autre axe de symétrie non diagonal du carré de part et d'autre de la fibre de transmission située au centre du carré et disposés aux interfaces des fibres ;

- un composant pour télécommunications optiques destiné à regrouper des lumières, comportant un ensemble de fibres et une optique de focalisation et de séparation à deux miroirs séparateurs dans lequel il est prévu une pluralité de fibres de transmission noyées dans un bloc solidaire de l'optique de focalisation et dont les extrémités sont situées dans le plan de focalisation au voisinage de l'axe optique principal tandis que ledit bloc renferme aussi un ensemble de fibres reliées aux émetteurs, la position géométrique de l'extrémité des fibres reliées aux émetteurs dans ledit plan de focalisation étant telle que chaque fibre de transmission est conjuguée par l'optique de focalisation et de séparation à un groupe d'au moins deux fibres reliées aux émetteurs, l'ensemble des fibres optiques de transmission et des fibres optiques liées aux émetteurs étant disposé sous forme d'une barrette rectiligne de fibres sur laquelle les fibres de transmission sont placées l'une à côté de l'autre et les fibres reliées aux émetteurs sont aux positions relatives optiquement conjuguées par l'optique de focalisation à miroirs séparateurs dont les centres de réflexion dans le plan de focalisation sont décalés le long de la barrette ;

- un composant pour télécommunications optiques destiné à regrouper des lumières, comportant un ensemble de fibres et une optique de focalisation à deux miroirs séparateurs dans lequel il est prévu une pluralité de fibres de transmission noyées dans un bloc dont les extrémités sont situées dans le plan de focalisation au voisinage de l'axe optique principal tandis que ledit bloc renferme aussi un ensemble de fibres reliées aux émetteurs, la position géométrique de l'extrémité des fibres reliées aux émetteurs dans ledit plan de focalisation étant telle que chaque fibre de transmission est conjuguée par l'optique de focalisation et de séparation à un groupe d'au moins deux fibres reliées aux émetteurs, l'ensemble des fibres optiques de transmission et des fibres optiques liées aux émetteurs étant disposé sous forme de trois barrettes rectilignes parallèles entre elles, les fibres de transmission sont alignées côte à côte et les fibres reliées aux émetteurs sont aux positions relatives optiquement conjuguées par l'optique de focalisation à miroir séparateur, les centres de réflexion étant décalés entre eux dans la direction perpendiculaire à la ligne des fibres de transmission ;

- un composant pour télécommunications optiques destiné à regrouper des lumières, comportant un ensemble de fibres et une optique de focalisation et de séparation à deux miroirs séparateurs, dans lequel il est prévu trois fibres de transmission noyées dans un bloc et dont les extrémités sont situées dans le plan de focalisation au voisinage de l'axe optique principal tandis que ledit bloc renferme aussi un ensemble de fibres reliées aux émetteurs, la position géométrique de l'extrémité des fibres reliées aux émetteurs dans ledit plan de focalisation étant telle que chaque fibre de transmission est conjuguée par l'optique de focalisation et de séparation à deux fibres reliées aux émetteurs, l'ensemble des fibres optiques de transmission et des fibres optiques liées aux émetteurs comportant trois barrettes rectilignes de trois fibres juxtaposées en carré et tel que les trois fibres de transmission soient alignées selon l'un des axes de symétrie non diagonal du carré et que les deux centres de réflexion correspondant aux deux miroirs séparateurs soient situés sur l'autre axe de symétrie non diagonal du carré de part et d'autre de la fibre de transmission située au centre du carré et disposés aux interfaces des fibres .

Une demande divisionnaire EP-A-0 211 469 a été déposée le 5 septembre 1986 sous le n° 86 201530.2. Cette demande divisionnaire concerne un composant pour télécommunications optiques destiné à démultiplexer des signaux portés par des lumières de longueurs d'onde différentes comportant un ensemble de fibres et une optique de focalisation et de séparation à réseau de diffraction.

L'invention sera mieux comprise en se référant à des applications particulières données à titre d'exemples et représentées par les dessins annexés.

La figure 1 qui a été évoquée plus haut, est un rappel schématique d'une installation réalisée selon la technique antérieure, pour la distribution simultanée à plusieurs abonnés d'informations portées par une ligne générale.

La figure 2 met en évidence la réduction du nombre de composants d'extrémités résultant de la mise en œuvre de l'invention.

La figure 3 est un rappel de la structure d'un composant de répartition de type connu.

Les figures 4 et 5 montrent, pour ce même composant, deux répartitions de fibres selon l'invention permettant de tripler sa capacité. Selon la figure 4 les fibres sont juxtaposées en une seule barrette rectiligne ; selon la figure 5 les fibres sont réparties en carré.

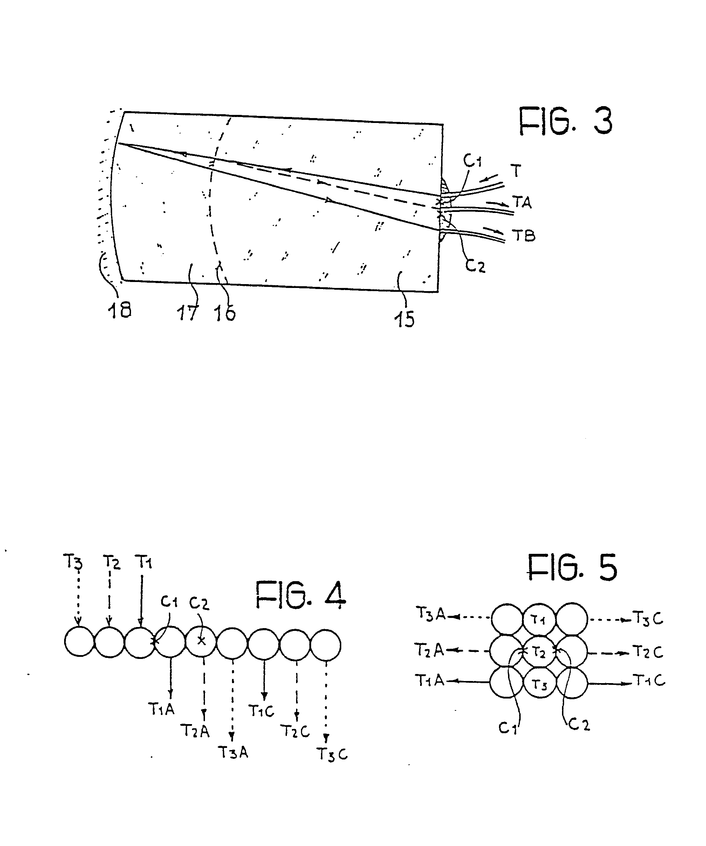

L'invention permet la distribution simultanée d'informations à plusieurs destinataires comme on le verra en se référant aux figures 2, 3, 4 et 5. Le composant usuel représenté à la figure 3, et utilisé trois fois en $D_1$, $D_2$ et $D_3$ sur le schéma de la figure 1, permet de répartir partiellement sur TA et partiellement sur TB la lumière amenée par la fibre de transmission T. Comme décrit plus en détail dans le document EP-A-0 109 904, le composant comporte un premier bloc 15 sur lequel est formé un miroir sphérique partiel 16 collé à un deuxième bloc 17 sur lequel est formé un deuxième miroir sphérique 18.

Les centres $C_1$ du miroir 16 et $C_2$ du miroir 18 sont situés dans le même plan que les extrémités des fibres T, TA et TB et légèrement décalés l'un par rapport à l'autre. Les rayons issus de l'extrémité de T qui rencontrent les zones réfléchissantes du miroir 16 forment l'image de T sur la fibre TA symétrique de T par rapport à $C_1$. Les rayons qui passent dans les zones transparentes de 16 forment une autre image de T sur la fibre TB symétrique de T par rapport à $C_2$.

Selon l'invention on peut maintenant utiliser ce même composant pour traiter, par la même fonction de distribution, en même temps les trois fibres de transmission $T_1$, $T_2$, et $T_3$. Le composant unique DT (figure 2) comportera maintenant neuf fibres (trois d'entrée et six de sortie). Une possibilité de positions relatives des fibres est donnée à la figure 4 où l'on utilise une barrette rectiligne de neuf fibres juxtaposées. Une autre possibilité de répartition de fibres est donnée à la figure 5 avec une disposition en carré.

Ici encore en utilisant le même composant, dans sa même fonction, pour trois groupes de fibres conjuguées objet-image, on économise deux composants sur trois, et l'économie peut encore être plus importante en utilisant un nombre accru de fibres.

Bien entendu l'invention n'est pas strictement limitée aux modes de réalisation qui ont été décrits à titre d'exemples, mais elle s'applique aussi aux réalisations qui n'en différeraient que par des détails, par des variantes d'exécution ou par l'utilisation de moyens équivalents.

C'est ainsi qu'elle s'applique dans les mêmes conditions à tous les composants optiques dans lesquels on utilise des fibres optiques en des positions relatives conjuguées objet-image pour regrouper ou séparer des lumières selon une fonction définie par la structure du composant. On pourra dans tous les cas utiliser simultanément plusieurs groupes de fibres conjuguées objet-image relativement à la même fonction, la seule limitation étant de ne pas dépasser, pour les extrémités de fibres, la zone où les aberrations restent à un niveau acceptable.

Tous les exemples décrits ci-dessus l'ont été dans des utilisations en vue de séparer des lumières, mais il est bien évident que les applications sont identiques lorsqu'il s'agit de regrouper une ou plusieurs lumières dans des fibres de transmission. Les composants à fonction partagée objet de l'invention peuvent aussi comporter à la fois des groupes de fibres utilisées dans le sens d'une séparation de lumières et des groupes en sens inverse pour regrouper des lumières.

**Revendications**

1. Composant pour télécommunications optiques destiné à séparer des lumières comportant un ensemble de fibres (T, TA, TC) et une optique de focalisation à deux miroirs séparateurs (16, 18) dans lequel il est prévu une pluralité de fibres de transmission (T1, T2, T3) noyées dans un bloc (15) solidaire de l'optique de focalisation et de séparation et dont les extrémités sont situées dans le plan de focalisation au voisinage de l'axe optique principal tandis que ledit bloc (15) renferme aussi un ensemble de fibres (T1A, T2A, T3A, T1C, T2C, T3C) reliées aux récepteurs, la position géométrique de l'extrémité des fibres (T1A, T2A, T3A, T1C, T2C, T3C) reliées aux récepteurs dans ledit plan de focalisation étant telle que chaque fibre de transmission (T3, T2, T1) est conjuguée par l'optique de focalisation et de séparation (16, 18) à un groupe d'au moins deux fibres (T1A, T1C, T2A, T2C, T3A, T3C) reliées aux récepteurs, l'ensemble des fibres optiques de transmission (T3, T2, T1) et des fibres optiques (T1A, T2A, T3A, T1C, T2C, T3C) liées aux récepteurs étant disposé sous forme d'une barrette rectiligne de fibres sur laquelle les fibres de transmission (T3, T2, T1) sont placées l'une à côté de l'autre et les fibres (T1A, T2A, T3A, T1C, T2C, T3C) reliées aux récepteurs sont aux positions relatives optiquement conjuguées par l'optique de focalisation à miroirs séparateurs (16, 18) dont les centres de réflexion (C1, C2) dans le plan de focalisation sont décalés le long de la barrette.

2. Composant pour télécommunications optiques destiné à séparer des lumières comportant un ensemble de fibres (T, TA, TC) et une optique de focalisation à deux miroirs séparateurs (16, 18), dans lequel il est prévu une pluralité de fibres de transmission (T1, T2, T3) noyées dans un bloc (15) dont les extrémités sont situées dans le plan de focalisation au voisinage de l'axe optique principal tandis que ledit bloc (15) renferme aussi un ensemble de fibres (T1A, T2A, T3A, T1C, T2C, T3C) reliées aux récepteurs, la position géométrique de l'extrémité des fibres (T1A, T2A, T3A, T1C, T2C, T3C) reliées aux récepteurs dans ledit plan de focalisation étant telle que chaque fibre de transmission (T3, T2, T1) est conjuguée par l'optique de focalisation et de séparation (16, 18) à un groupe d'au moins deux fibres (T1A, T1C, T2A, T2C, T3A, T3C) reliées aux récepteurs, l'ensemble des fibres optiques de transmission (T3, T2, T1) et des fibres optiques (T1A, T2A, T3A, T1C, T2C, T3C) liées aux récepteurs étant disposé sous forme de trois barrettes rectilignes parallèles entre elles, les fibres de transmission (T3, T2, T1) sont alignées côte à côte et les fibres (T1A, T2A, T3A, T1C, T2C, T3C) reliées aux récepteurs sont aux positions relatives optiquement conjuguées par l'optique de focalisation à miroir séparateur (16, 18), les centres de réflexion (C1, C2) étant décalés entre eux dans la direction perpendiculaire à la ligne des fibres de transmission (T1, T2, T3).

3. Composant pour télécommunications optiques destiné à séparer des lumières selon la revendication 2, comportant un ensemble de fibres (T, TA, TC) et une optique de focalisation et de séparation à deux miroirs séparateurs (16, 18), caractérisé en ce qu'il comporte trois fibres de transmission (T1, T2, T3), noyées dans un bloc (15) dont les extrémités sont situées dans le plan de focalisation au voisinage de l'axe optique principal tandis que ledit bloc (15) renferme aussi un ensemble de fibres (T1A, T2A, T3A, T1C, T2C, T3C) reliées aux récepteurs, la position géométrique de l'extrémité des fibres (T1A, T2A, T3A, T1C, T2C, T3C) reliées aux récepteurs dans ledit plan de focalisation étant telle que chaque fibre de transmission (T3, T2, T1) est conjuguée par l'optique de focalisation et de séparation (16, 18) à deux fibres (T1A, T1C, T2A, T2C, T3A, T3C) reliées aux récepteurs, l'ensemble des fibres optiques de transmission (T3, T2, T1) et des fibres optiques (T1A, T2A, T3A, T1C, T2C, T3C) liées aux récepteurs comportant trois barrettes rectilignes de trois fibres juxtaposées en carré et tel que les trois fibres de transmission (T1, T2, T3) soient alignées selon l'un des axes de symétrie non diagonal du carré et que les deux centres de réflexion (C1, C2) correspondant aux deux miroirs séparateurs (16, 18) soient situés sur l'autre axe de symétrie non diagonal du carré de part et d'autre de la fibre de transmission située au centre du carré et disposés aux interfaces des fibres (T2, T2A et T2C).

4. Composant pour télécommunications optiques destiné à regrouper des lumières, comportant un ensemble de fibres (T, TA, TC) et une optique de focalisation et de séparation à deux miroirs séparateurs (16, 18) dans lequel il est prévu une pluralité de fibres de transmission (T1, T2, T3) noyées dans un bloc (15) solidaire de l'optique de focalisation et dont les extrémités sont situées dans le plan de focalisation au voisinage de l'axe optique principal tandis que ledit bloc (15) renferme aussi un ensemble de fibres reliées aux émetteurs, la position géométrique de l'extrémité des fibres (T1A, T2A, T3A, T1C, T2C, T3C) reliées aux émetteurs dans ledit plan de focalisation étant telle que chaque fibre de transmission (T3, T2, T1) est conjuguée par l'optique de focalisation et de séparation (16, 18) à un groupe d'au moins deux fibres (T1A, T1C, T2A, T2C, T3A, T3C) reliées aux émetteurs, l'ensemble des fibres optiques de transmission (T3, T2, T1) et des fibres optiques (T1A, T2A, T3A, T1C, T2C, T3C) liées aux émetteurs étant disposé sous forme d'une barrette rectiligne de fibres sur laquelle les fibres de transmission (T3, T2, T1) sont placées l'une à côté de l'autre et les fibres (T1A, T2A, T3A, T1C, T2C, T3C) reliées aux émetteurs sont aux positions relatives optiquement conjuguées par l'optique de focalisation à miroirs séparateurs (16, 18) dont les centres de réflexion (C1, C2) dans le plan de focalisation sont décalés le long de la barrette.

5. Composant pour télécommunications optiques destiné à regrouper des lumières, comportant un ensemble de fibres (T, TA, TC) et une optique de focalisation à deux miroirs séparateurs (16, 18), dans lequel il est prévu une pluralité de fibres de transmission (T1, T2, T3 noyées dans un bloc (15) dont les extrémités sont situées dans le plan de focalisation au voisinage de l'axe optique principal tandis que ledit bloc (15) renferme aussi un ensemble de fibres (T1A, T2A, T3A, T1C, T2C, T3C) reliées aux émetteurs, la position géométrique de l'extrémité des fibres (T1A, T2A, T3A, T1C, T2C, T3C) reliées aux émetteurs dans ledit plan de focalisation étant telle que chaque fibre de transmission (T1, T2, T3) est conjuguée par l'optique de focalisation et de séparation (16, 18) à un groupe d'au moins deux fibres reliées aux émetteurs, l'ensemble des fibres optiques de transmission (T1, T2, T3) et des fibres optiques (T1A, T2A, T3A, T1C, T2C, T3C) liées aux émetteurs étant disposé sous forme de trois barrettes rectilignes parallèles entre elles, les fibres de transmission (T1, T2, T3) sont alignées côte à côte et les fibres (T1A, T2A, T3A, T1C, T2C, T3C) reliées aux émetteurs sont aux positions relatives optiquement conjuguées par l'optique de focalisation à miroir séparateur (16, 18), les centres de réflexion (C1, C2) étant décalés entre eux dans la direction perpendiculaire à la ligne des fibres de transmission (T1, T2, T3).

6. Composant pour télécommunications optiques destiné à regrouper des lumières selon la revendication 5, comportant un ensemble de fibres (T, TA, TC) et une optique de focalisation et de séparation à deux miroirs (16, 18) séparateurs, caractérisé en ce qu'il comporte trois fibres de transmission (T1, T2, T3) noyées dans un bloc (15) et dont les extrémités sont situées dans le plan de focalisation au voisinage de l'axe optique principal tandis que ledit bloc (15) renferme aussi un ensemble de fibres (T1A, T2A, T3A, T1C, T2C, T3C) reliées aux émetteurs, la position géométrique de l'extrémité des fibres (T1A, T2A, T3A, T1C, T2C, T3C) reliées aux émetteurs dans ledit plan de focalisation étant telle que chaque fibre de transmission (T1, T2, T3) est conjuguée par l'optique de focalisation de séparation (16, 18) à deux fibres (T1A, T1C, T2A, T2C, T3A, T3C) reliées aux émetteurs, l'ensemble des fibres optiques de transmission (T1, T2, T3) et des fibres optiques (T1A, T2A, T3A, T1C, T2C, T3C) liées aux émetteurs comportant 3 barrettes rectilignes de trois fibres juxtaposées en carré et tel que les trois fibres de transmission (T1, T2, T3) soient alignées selon l'un des axes de symétrie non diagonal du carré et que les deux centres de réflexion (C1, C2) correspondant aux deux miroirs séparateurs (16, 18) soient situés sur l'autre axe de symétrie non diagonal du carré de part et d'autre de la fibre de transmission située au centre du carré et disposés aux interfaces des fibres (T2, T2A et T2C).

## Claims

1. Component for optical telecommunications, which is intended to separate light beams, comprising a set of fibres (T, TA, TC) and an optical focusing system having two separating mirrors (16, 18), in which there is provided a plurality of transmission fibres (T1, T2, T3) embedded in a block (15) integral with the optical focusing and separating system, and the ends of which are situated in the focusing plane in the vicinity of the principal optical axis, while the said block (15) comprises also a set of fibres (T1A, T2A, T3A, T1C, T2C, T3C) connected to the receivers, the geometric position of the end of the fibres (T1A, T2A, T3A, T1C, T2C, T3C) connected to the receivers in the said focusing plane being such that each transmission fibre (T3, T2, T1) is conjugated by the optical focusing and separating system (16, 18), with a group of at least two fibres (T1A, T1C, T2A, T2C, T3A, T3C) connected to the receivers, the set of optical transmission fibres (T3, T2, T1) and of the optical fibres (T1A, T2A, T3A, T1C, T2C, T3C) connected to the receivers being disposed as a rectilinear strip of fibres on which strip the transmission fibres (T3, T2, T1) are placed one beside the other and the fibres (T1A, T2A, T3A, T1C, T2C, T3C) connected to the receivers are in the relative positions optically conjugated by the optical focusing system having separating mirrors (16, 18) the centers of reflection (C1, C2) of which in the focusing plane are offset along the strip.

2. Component for optical telecommunications, which is intended to separate light beams, comprising a set of fibres (T, TA, TC) and an optical focusing system having two separating mirrors (16, 18), in which there is provided a plurality of transmission fibres, (T1, T2, T3) embedded in a block (15), the ends of which are situated in the focusing plane in the vicinity of the principal optical axis, while the said block (15) comprises also set of fibres (T1A, T2A, T3A, T1C, T2C, T3C) connected to the receivers, the geometric position of the end of the fibres (T1A, T2A, T3A, T1C, T2C, T3C) connected to the receivers in the said focusing plane being such that each transmission fibre (T3, T2, T1) is conjugated by the optical focusing and separating system (16, 18), with a group of at least two fibres (T1A, T1C, T2A, T2C, T3A, T3C) connected to the receivers, the set of the optical transmission fibres (T3, T2, T1) and the optical fibres (T1A, T2A, T3A, T1C, T2C, T3C) connected to the receivers being disposed as three rectilinear strips parallel to one another, the transmission fibres (T3, T2, T1) are aligned side by side, and the fibres (T1A, T2A, T3A, T1C, T2C, T3C) connected to the receivers are in the relative positions optically conjugated by the optical focusing system having a separating mirror (16, 18), the centres of reflection (C1, C2) being offset in relation to one another in the direction perpendicular to the line of the transmission fibres (T1, T2, T3).

3. Component for optical telecommunications, which is intended to separate light beams according to claim 2, comprising a set of fibres (T, TA, TC) and an optical focusing and separating system having two separating mirrors (16, 18), characterized in that it comprises three transmission fibres (T1, T2, T3), embedded in a block (15), the ends of which are situated in the focusing plane in the vicinity of the principal optical axis, while the said block (15) comprises also a set of fibres (T1A, T2A, T3A, T1C, T2C, T3C) connected to the receivers, the geometric position of the end of the fibres (T1A, T2A, T3A, T1C, T2C, T3C) connected to the receivers in the said focusing plane being such that each transmission fibre (T3, T2, T1) is conjugated by the optical focusing and separating system (16, 18), with two fibres (T1A, T1C, T2A, T2C, T3A, T3C) connected to the receivers, the set of the optical transmission fibres (T3, T2, T1) and the optical fibres (T1A, T2A, T3A, T1C, T2C, T3C) connected to the receivers comprising three rectilinear strips of three fibres juxtaposed in a square and such that the three transmission fibres (T1, T2, T3) are aligned along one of the axes of symmetry not being a diagonal of the square, and that the two centres of reflection (C1, C2) corresponding to the two separating mirrors (16, 18) are situated on the other axis of symmetry, not being a diagonal of the square, on both sides of the transmission fibre situated at the centre of the square and disposed at the interfaces of the fibres (T2, T2A and T2C).

4. Component for optical telecommunications, which is intended to regroup light beams, comprising a set of fibres, (T, TA, TC) and an optical focusing and separating system having two separating mirrors (16, 18) in which there is provided a plurality of transmission fibres (T1, T2, T3) embedded in a block (15) integral with the optical focusing system and the ends of which are situated in the focusing plane in the vicinity of the principal optical axis, while the said block (15) comprises also a set of fibres connected to the emitters, the geometric position of the end of the fibres (T1A, T2A, T3A, T1C, T2C, T3C) connected to the emitters in the said focusing plane being such that each transmission fibre (T3, T2, T1) is conjugated by the optical focusing and separating system (16, 18), with a group of at least two fibres (T1A, T1C, T2A, T2C, T3A, T3C) connected to the emitters, the set of the optical transmission fibres (T3, T2, T1) and the optical fibres (T1A, T2A, T3A, T1C, T2C, T3C) connected to the emitters being disposed in the form of a rectilinear strip of fibres on which strip the transmission fibres (T3, T2, T1) are placed one beside the other and the fibres (T1A, T2A, T3A, T1C, T2C, T3C) connected to the emitters are in the relative positions optically conjugated by the optical focusing system having separating mirrors (16, 18), the centres of reflection (C1, C2) of which in the focusing plane are offset along the strip.

5. Component for optical telecommunications, which is intended to regroup light beams, comprising a set of fibres (T, TA, TC) and an optical focusing system having two separating mirrors (16, 18) in which there is provided a plurality of transmission fibres (T1, T2, T3) embedded in a block (15) the ends of which are situated in the focusing plane in the vicinity of the principal optical axis while the said block (15) comprises also a set of fibres (T1A, T2A, T3A, T1C, T2C, T3C) connected to the emitters, the geometric position of the end of the fibres (T1A, T2A, T3A, T1C, T2C, T3C) connected to the emitters in the said focusing plane being such that each transmission fibre (T1, T2, T3) is conjugated by the optical focusing and separating system (16, 18) with a group of at least two fibres connected to the emitters, the set of the optical transmission fibres (T1, T2, T3) and the optical fibres (T1A, T2A, T3A, T1C, T2C, T3C) connected to the emitters being disposed as three rectilinear strips parallel to one another, the transmission fibres (T1, T2, T3) are aligned side by side, and the fibres (T1A, T2A, T3A, T1C, T2C T3C) connected to the emitters are in the relative positions optically conjugated by the optical focusing system having a separating mirror (16, 18), the centres of reflection (C1, C2) being offset in relation to one another in the direction perpendicular to the line of the transmission fibres (T1, T2, T3).

6. Component for optical telecommunications, which is intended to regroup light beams according to claim 5, comprising a set of fibres (T, TA, TC) and an optical focusing and separating system having two separating mirrors (16, 18), characterized in that it comprises three transmission fibres (T1, T2, T3) embedded in a block (15) and the ends of which are situated in the focusing plane in the vicinity of the principal optical axis while the said block (15) comprises also a set of fibres (T1A, T2A, T3A, T1C, T2C, T3C) connected to the emitters, the geometric position of the end of the fibres (T1A, T2A, T3A, T1C, T2C, T3C) connected to the emitters in the said focusing plane being such that each transmission fibre (T1, T2, T3) is conjugated by the optical focusing and separating system (16, 18), with two fibres (T1A, T1C, T2A, T2C, T3A, T3C) connected to the emitters, the set of the optical transmission fibres (T1, T2, T3) and the optical fibres (T1A, T2A, T3A, T1C, T2C, T3C) connected to the emitters comprising, 3 rectilinear strips of three fibres juxtaposed in a square and such that the three transmission fibres (T1, T2, T3) are aligned along one of the axes of symmetry, not being a diagonal of the square, and that the two centres of reflection (C1, C2) corresponding to the two separating mirrors (16, 18) are situated on the other axis of symmetry, not being a diagonal of the square, on both sides of the transmission fibre situated at the centre of the square and disposed at the interfaces of the fibres (T2, T2A and T2C).

**Patentansprüche**

1. Bauteil für optische Fernverbindungen, das Lichtstrahlen trennt mit mehreren Fasern (T, TA, TC) und einer Fokalisierungsoptik mit zwei Trennspiegeln (16, 18), in der mehrere Übertragungsfasern (T1, T2, T3) vorgesehen sind, die in einem Block (15) eingebettet sind, der einstückig mit der Fokalisierungs- und Trennoptik ist und deren Enden sich in der Brennebene der optischen Hauptachse benachbart befinden, wobei der Block (15) auch Fasern (T1A, T2A, T3A, T1C, T2C, T3C) einschließt, die mit Empfängern verbunden sind, wobei die geometrische Lage des Endes derjenigen Fasern (T1A, T2A, T3A, T1C, T2C, T3C), die in der Brennebene mit den Empfängern verbunden sind, derart ist, daß jede Übertragungsfaser (T3, T2, T1) über die Fokalisierungs- und Trennoptik (16, 18) einer Gruppe von wenigstens zweien derjenigen Fasern (T1A, T1C, T2A, T2C, T3A, T3C), die mit den Empfängern verbunden sind, zugeordnet ist, wobei ferner die Gesamtheit der optischen Übertragungsfasern (T3, T2, T1) und der mit den Empfängern verbundenen Fasern (T1A, T2A, T3A, T1C, T2C, T3C) in Form einer rechteckigen Stange aus Fasern vorliegt, in der sich die Übertragungsfasern (T3, T2, T1) nebeneinander befinden und in der die mit den Empfängern verbundenen Fasern (T1A, T2A, T3A, T1C, T2C, T3C) sich in Relativlagen befinden, die über die Fokalisierungsoptik mit den Trennspiegeln (16, 18) optisch zugeordnet sind, deren Reflexionszentren (C1, C2) in der Brennebene längs der Stange versetzt sind.

2. Bauteil für optische Fernverbindungen, das Lichtstrahlen trennt mit mehreren Fasern (T, TA, TC) und einer Fokalisierungsoptik mit zwei Trennspiegeln (16, 18), in der mehrere Übertragungsfasern (T1, T2, T3) vorgesehen sind, die in einem Block (15) eingebettet sind und deren Enden sich in der Brennebene der optischen Hauptachse benachbart befinden, wobei der Block (15) auch Fasern (T1A, T2A, T3A, T1C, T2C, T3C) einschließt, die mit Empfängern verbunden sind, wobei die geometrische Lage des Endes derjenigen Fasern (T1A, T2A, T3A, T1C, T2C, T3C), die in der Brennebene mit den Empfängern verbunden sind, derart ist, daß jede Übertragungsfaser (T3, T2, T1) über die Fokalisierungs- und Trennoptik (16, 18) einer Gruppe von wenigstens zweien derjenigen Fasern (T1A, T1C, T2A, T2C, T3A, T3C), die mit den Empfängern verbunden sind, zugeordnet ist, wobei ferner die Gesamtheit der optischen Übertragungsfasern (T3, T2, T1) und der mit den Empfängern verbundenen Fasern (T1A, T2A, T3A, T1C, T2C, T3C) in Form dreier rechteckiger, zueinander paralleler Stangen vorliegt, in der sich die Übertragungsfasern (T3, T2, T1) nebeneinander befinden und in der die mit den Empfängern verbundenen Fasern (T1A, T2A, T3A, T1C, T2C, T3C) sich in Relativlagen befinden, die über die Fokalisierungsoptik mit den Trennspiegeln (16, 18) optisch zugeordnet sind, deren Reflexionszentren (C1, C2) zueinander in einer Richtung senkrecht zur Richtung der Übertragungsfasern (T1, T2, T3) versetzt sind.

3. Bauteil nach Anspruch 2 mit mehreren Fasern (T, TA, TC) und mit einer Fokalisier- und Trennoptik mit zwei Trennspiegeln (16, 18), dadurch gekennzeichnet, daß drei Übertragungsfasern (T1, T2, T3) vorgesehen sind die in einem Block (15) eingebettet sind und deren Enden sich in der Brennebene der optischen Hauptachse benachbart befinden, wobei der Block (15) auch Fasern (T1A, T2A, T3A, T1C, T2C, T3C) einschließt, die mit Empfängern verbunden sind, wobei die geometrische Lage des Endes derjenigen Fasern (T1A, T2A, T3A, T1C, T2C, T3C), die in der Brennebene mit den Empfängern verbunden sind, derart ist, daß jede Übertragungsfaser (T3, T2, T1) über die Fokalisierungs- und Trennoptik (16, 18) zweien derjenigen Fasern (T1A, T1C, T2A, T2C, T3A, T3C), die mit den Empfängern verbunden sind, zugeordnet ist, wobei ferner die Gesamtheit der optischen Übertragungsfasern (T3, T2, T1) und der mit den Empfängern verbundenen Fasern (T1A, T2A, T3A, T1C, T2C, T3C) drei rechteckige Stangen aus drei quadratisch angeordneten, nebeneinander befindlichen Fasern aufweist derart, daß die drei Übertragungsfasern (T1, T2, T3) entsprechend den nicht diagonalen Symmetrieachsen des Quadrats angeordnet sind und daß die den beiden Trennspiegel (16, 18) entsprechenden Reflexionszentren (C1, C2) sich auf der anderen, nicht diagonalen Symmetrieachse des Quadrats oder Rechtecks befinden, und zwar beidseits derjenigen Übertragungsfaser, die sich im Mittelpunkt des Quadrats befindet bei Anordnung an der Grenzfläche der Fasern (T2, T2A und T2C).

4. Bauteil für optische Fernverbindungen, das Lichtstrahlen umgruppiert mit mehreren Fasern (T, TA, TC) und einer Fokalisierungsoptik mit zwei Trennspiegeln (16, 18), in der mehrere Übertragungsfasern (T1, T2, T3) vorgesehen sind, die in einem Block (15) eingebettet sind, der einstückig mit der Fokalisierungs- und Trennoptik ist und deren Enden sich in der Brennebene der optischen Hauptachse benachbart befinden, wobei der Block (15) auch Fasern (T1A, T2A, T3A, T1C, T2C, T3C) einschließt, die mit Empfängern verbunden sind, wobei die geometrische Lage des Endes derjenigen Fasern (T1A, T2A, T3A, T1C, T2C, T3C), die in der Brennebene mit den Empfängern verbunden sind, derart ist, daß jede Übertragungsfaser (T3, T2, T1) über die Fokalisierungs- und Trennoptik (16, 18) einer Gruppe von wenigstens zweien derjenigen Fasern (T1A, T1C, T2A, T2C, T3A, T3C), die mit den Empfängern verbunden sind, zugeordnet ist, wobei ferner die Gesamtheit der optischen Übertragungsfasern (T3, T2, T1) und der mit den Empfängern verbundenen Fasern (T1A, T2A, T3A, T1C, T2C, T3C) in Form einer rechteckigen Stange aus Fasern vorliegt, in der sich die Übertragungsfasern (T3, T2, T1) nebeneinander befinden und in der die mit den Empfängern verbundenen Fasern (T1A, T2A, T3A, T1C, T2C, T3C) sich in Relativlagen befinden, die über die Fokalisierungsoptik mit den Trennspiegeln (16, 18) optisch zugeordnet sind, deren Reflexionszentren (C1, C2) in der Brennebene längs der Stange versetzt sind.

5. Bauteil für optische Fernverbindungen, das Lichtstrahlen umgruppiert mit mehreren Fasern (T, TA, TC) und einer Fokalisierungsoptik mit zwei Trennspiegeln (16, 18), in der mehrere Übertragungsfasern (T1, T2, T3) vorgesehen sind, die in einem Block (15) eingebettet sind und deren Enden sich in der Brennebene der optischen Hauptachse benachbart befinden, wobei der Block (15) auch Fasern (T1A, T2A, T3A, T1C, T2C, T3C) einschließt, die mit Empfängern verbunden sind, wobei die geometrische Lage des Endes derjenigen Fasern (T1A, T2A, T3A, T1C, T2C, T3C), die in der Brennebene mit den Empfängern verbunden sind, derart ist, daß jede Übertragungsfaser (T3, T2, T1) über die Fokalisierungs- und Trennoptik (16, 18) einer Gruppe von wenigstens zweien derjenigen Fasern (T1A, T1C, T2A, T2C, T3A, T3C), die mit den Empfängern verbunden sind, zugeordnet ist, wobei ferner die Gesamtheit der optischen Übertragungsfasern (T3, T2, T1) und der mit den Empfängern verbundenen Fasern (T1A, T2A, T3A, T1C, T2C, T3C) in Form dreier rechteckiger, zueinander paralleler Stangen vorliegt, in der sich die Übertragungsfasern (T3, T2, T1) nebeneinander befinden und in der die mit den Empfängern verbundenen Fasern (T1A, T2A, T3A, T1C, T2C, T3C) sich in Relativlagen befinden, die über die Fokalisierungsoptik mit den Trennspiegeln (16, 18) optisch zugeordnet sind, deren Reflexionszentren (C1, C2) zueinander in einer Richtung senkrecht zur Richtung der Übertragungsfasern (T1, T2, T3) versetzt sind.

6. Bauteil nach Anspruch 5 mit mehreren Fasern (T, TA, TC) und mit einer Fokalisier- und Trennoptik mit zwei Trennspiegeln (16, 18), dadurch gekennzeichnet, daß drei Übertragungsfasern (T1, T2, T3) vorgesehen sind die in einem Block (15) eingebettet sind und deren Enden sich in der Brennebene der optischen Hauptachse benachbart befinden, wobei der Block (15) auch Fasern (T1A, T2A, T3A, T1C, T2C, T3C) einschließt, die mit Empfängern verbunden sind, wobei die geometrische Lage des Endes derjenigen Fasern (T1A, T2A, T3A, T1C, T2C, T3C), die in der Brennebene mit den Empfängern verbunden sind, derart ist, daß jede Übertragungsfaser (T3, T2, T1) über die Fokalisierungs- und Trennoptik (16, 18) zweien derjenigen Fasern (T1A, T1C, T2A, T2C, T3A, T3C), die mit den Empfängern verbunden sind, zugeordnet ist, wobei ferner die Gesamtheit der optischen Übertragungsfasern (T3, T2, T1) und der mit den Empfängern verbundenen Fasern (T1A, T2A, T3A, T1C, T2C, T3C) drei rechteckige Stangen aus drei quadratisch angeordneten, nebeneinander befindlichen Fasern aufweist derart, daß die drei Übertragungsfasern (T1, T2, T3) entsprechend den nicht diagonalen Symmetrieachsen des Quadrats angeordnet sind und daß die den beiden Trennspiegel (16, 18) entsprechenden Reflexionszentren (C1, C2) sich auf der anderen, nicht diagonalen Symmetrieachse des Quadrats oder Rechtecks befinden, und zwar beidseits derjenigen Übertragungsfaser, die sich im Mittelpunkt des Quadrats befindet bei Anordnung an der Grenzfläche der Fasern (T2, T2A und T2C).

# FIG. 1

# FIG. 2

FIG. 3

FIG. 4

FIG. 5